# FASCICULE DE BREVET EUROPEEN

(11) **EP 0 493 180 B1**
(45) Date de publication et mention de la délivrance du brevet: **13.05.1998**
(21) Numéro de dépôt: 91403392.3
(22) Date de dépôt: 13.12.1991
(51) Int. Cl.: H04N 5/445

(54) **Procédé de synchronisation de fonctions de commande avec des signaux vidéo dans un récepteur de télévision et dispositif de mise en oeuvre**
Verfahren zur Synchronisation der Steuerfunktionen mit Hilfe von Videosignalen in einem Videoempfänger und Gerät zur Durchführung des Verfahrens
Method for synchronization of control functions with video signals and apparatus for carrying out the method

(30) Priorité: 21.12.1990 FR 9016134
(43) Date de publication de la demande: 01.07.1992
(73) Titulaire: THOMSON multimedia, 92648 Boulogne Cédex (FR)
(72) Inventeur: Guillon, Jean-Claude, F-92045 Paris la Défense (FR)
(74) Mandataire: Ruellan-Lemonnier, Brigitte

(56) Documents cités:
- EP-A- 163 807
- EP-A- 400 990
- US-A- 4 200 869

## Description

La présente invention concerne un procédé de synchronisation de fonctions de commande avec des signaux vidéo dans un récepteur de télévision ainsi qu'un dispositif de mise en oeuvre de ce procédé.
Le téléviseur a longtemps été l'appareil permettant de reproduire des images reçues par l'intermédiaire d'une antenne et ne pouvait en aucun cas être utilisé pour modifier ou créer de nouvelles images. Cette situation a commencé à changer avec l'apparition des circuits intégrés et la création d'un système de transmission de données : le télétexte. Aujourd'hui, le téléviseur est utilisé non seulement pour afficher des pages de télétexte, mais également un menu. Le menu est l'élément permettant une commande interactive du téléviseur : les ordres de l'usager sont transmis au téléviseur par la télécommande.

Les commandes entraînent l'affichage de pages de texte informant l'usager sur l'action résultant de ses ordres ou le guidant pour ses choix ultérieurs.

La demande de brevet EPA 400990 décrit un dispositif pour surimposer une image prédéterminée sur un signal vidéo.
Le dispositif comporte à cette fin des moyens de stockage de l'image prédéterminée et des moyens de commutation pour lire séquentiellement les informations stockées dans les moyens de stockage de l'information prédéterminée, en synchronisme avec le signal vidéo, et commuter de facon sélective pour présenter soit un pixel de l'image prédéterminée soit un pixel en provenance du signal vidéo. La sélection entre pixel de l'image prédéterminée est faite en fonction du contenu de l'information stockée dans les moyens de stockage de l'image prédéterminée.

Le brevet US-A-4.200.869 est lui relatif à un dispositif de commande de visualisation de données sur un tube cathodique.

Le dispositif décrit dans le brevet trouve son application essentielle dans les moniteurs de calculateur où il permet de déplacer l'image à visionner dans un sens horizontal ou vertical. On peut ainsi faire défiler un document mémorisé dont une partie seulement est visible sur l'écran.
Le dispositif comprend à cette fin plusieurs mémoires dont le mode de balayage est organisé pour permettre les mouvements envisagés.
Les données chargées dans ces mémoires comportent, en plus des données nécessaires à la visualisation, un bit destinée à commander l'apparition ou la non apparition de l'information commandée par le bit. Selon la valeur du bit, il est alors possible de sélectionner les lignes qui apparaîtront sur l'écran (cas du déplacement vertical d'image) ou les colonnes (cas du déplacement horizontal).

Avec une telle architecture, il est possible de commander le défilement mais aussi la surimposition d'une ou plusieurs images prédéterminées, par exemple, les limites horizontales et verticales d'un tableau de présentation et les caractères présents dans ledit tableau.

La valeur du bit de commande d'insertion est introduite automatiquement de façon connue dans les mémoires en fonction des commandes reçues d'un utilisateur du dispositif.

Dans le cas des deux documents cités ci-dessus, l'une au moins des images à superposer à l'autre est issue d'un générateur de caractères.

Le nouveau standard D2-MAC paquets permet une nouvelle application de ces générateurs de caractères : il offre en effet la possibilité de transmettre des sous-titres sous une forme numérique et de commander leur affichage à partir du récepteur. L'usager dispose donc aujourd'hui avec son téléviseur d'un générateur d'images affichant, selon le cas, des pages de télétexte, des sous-titres ou un menu. Il est clair que cette liste n'est pas exhaustive et qu'elle s'allongera dans l'avenir.

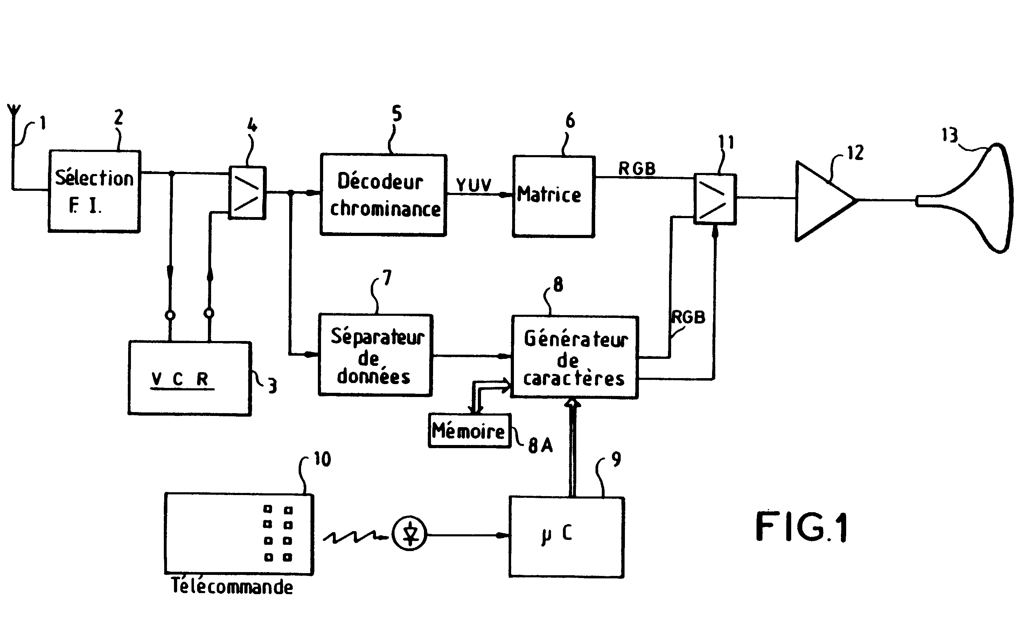

La plupart des téléviseurs comporteront, dans les années à venir, un générateur de caractères permettant d'afficher un menu sur l'écran du téléviseur. Cette solution présente l'avantage de réduire le coût de la fonction de commande tout en améliorant la fiabilité du téléviseur grâce à la réduction du nombre de bouton-poussoirs de la télécommande.
L'architecture du téléviseur correspondant au cas habituel est donnée figure 1.

Sur le bloc diagramme de cette figure 1, l'antenne 1 est reliée aux circuits 2 de réception et d'amplification à fréquence intermédiaire. La sortie démodulée des circuits 2 est reliée à l'entrée d'un magnétoscope 3 et à une entrée d'un commutateur 4 dont l'autre entrée est reliée à la sortie du magnétoscope 3. La sortie du commutateur 4 est reliée à deux voies de traitement. La première de ces voies comporte un décodeur de chrominance 5 et une matrice RVB 6. La seconde comporte un séparateur de données 7 (données telles que télétexte ... ) et un générateur de caractères 8 auquel est associée une mémoire 8A. Le générateur de caractères 8 est commandé par un micro-contrôleur 9 qui coopère avec un boîtier de télécommande 10 (généralement à infrarouges). Les sorties RVB des circuits 6 et 8 sont reliées chacune à une entrée d'un commutateur 11 qui est suivi d'un amplificateur vidéo 12 et du tube cathodique 13. La commande du commutateur 11 est assurée par le générateur 8.

On peut voir que dans un tel système le magnétoscope n'enregistre jamais la sortie du générateur de caractères. Il est évident que cette architecture ne peut pas être utilisée dans le cas où un décodeur D2-MAC paquets est implémenté : il est en effet indispensable, dans ce cas, d'enregistrer les sous-titres, quand ils existent.

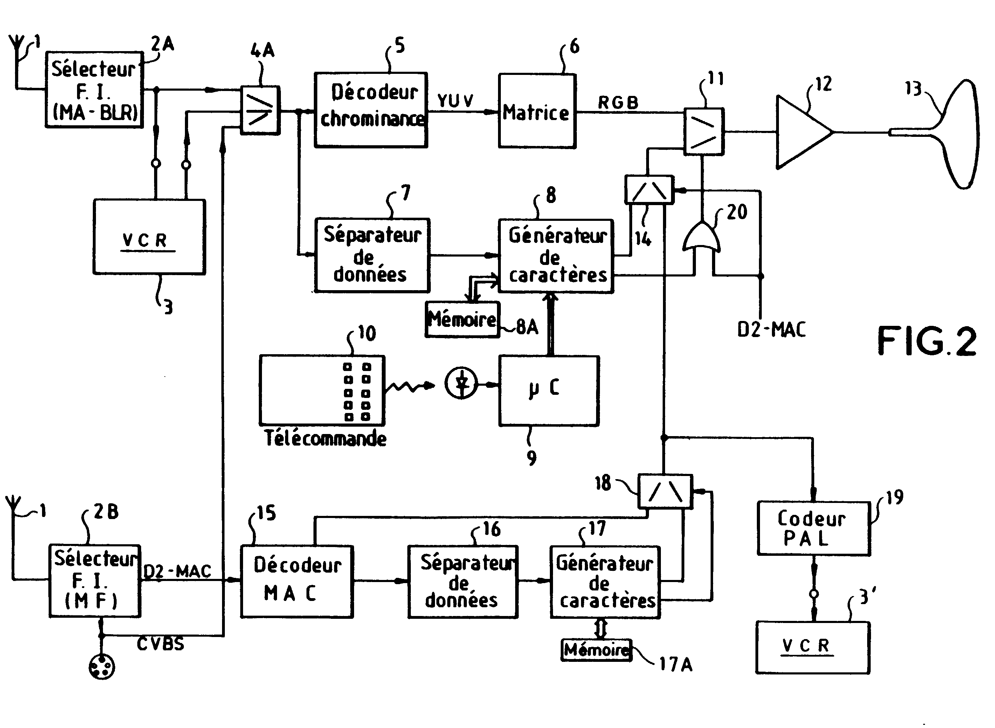

Sur le bloc-diagramme de la figure 2, les mêmes éléments que ceux de la figure 1, sont affectés des mêmes références numériques. L'antenne 1 du poste de télévision de la figure 2 est reliée d'une part à un premier sélecteur à fréquence de sortie intermédiaire 2A qui est relatif à la voie modulée en amplitude et est à bande latérale réduite.

L'antenne 1 est d'autre part reliée à un second sélecteur 2B à fréquence intermédiaire, relatif à la voie D2-MAC à modulation de fréquence.

La sortie du sélecteur 2A est reliée à une première entrée d'un commutateur 4A à trois entrées et à l'entrée du magnétoscope 3, dont la sortie est reliée à une deuxième entrée du commutateur 4A. La troisième entrée du commutateur est reliée à la sortie CVBS (...) du sélecteur 2B. Le commutateur 4A est suivi des circuits 5,6, 11 et 12, d'une part, et des circuits 7 et 8 d'autre part. On intercale entre les circuits 8 et 11 un commutateur 14. Le générateur 8 est commandé par le micro-contrôleur 9, coopérant avec la télécommande 10.

En aval de la sortie D2-MAC du sélecteur 2B, on branche respectivement un décodeur MAC 15, un séparateur de données 16, un générateur de caractères 17, et un commutateur 18 dont une entrée est reliée au décodeur 15, et qui est commandé par le générateur 17 auquel est associée une mémoire 17A. La sortie du commutateur 18 est reliée à une entrée du commutateur 14 et à un codeur PAL 19 dont la sortie est reliée au magnétoscope 3. Une sortie du générateur 8 est reliée à une entrée libre d'une porte OU 20 dont l'autre entrée reçoit les signaux D2-MAC du sélecteur 2B. Ces signaux D2-MAC commandent en outre le commutateur 14.

Ainsi, dans l'appareil de la figure 2, on peut voir que le décodeur D2-MAC 15 et le générateur de caractères associé 17 sont conçus comme un sous-ensemble autonome. Le téléviseur comporte dans ce cas deux générateurs de caractères 8 et 17 et notamment un générateur de caractères utilisé seulement pour les sous-titres (17). Le magnétoscope connecté au codeur PAL 19 n'enregistre donc que les sous-titres et pas le menu (qui est produit par le générateur de caractères 8). L'inconvénient majeur de cette solution est son coût : il faut en effet utiliser deux générateurs de caractères.

Une solution plus économique fait appel à des circuits intégrés numériques de marque INTERMETALL. Son architecture a été conçue pour que le circuit D2-MAC et le générateur de caractères constituent les éléments de base d'un appareil complet.

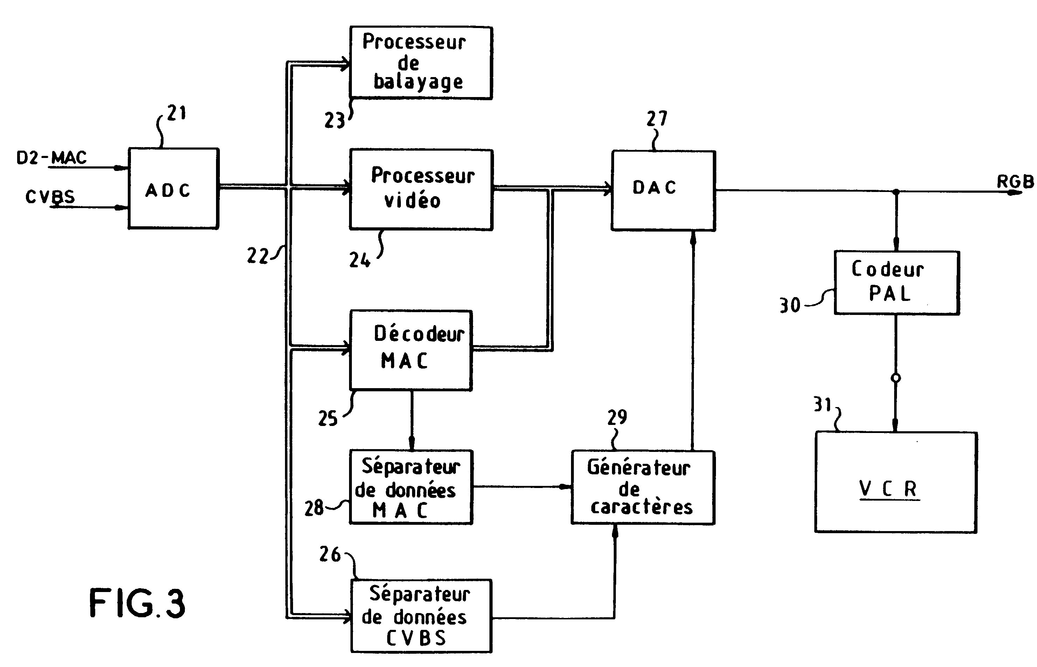

On a représenté en figure 3 les circuits nouveaux de cette solution. Les autres circuits, non représentés, sont ceux branchés en amont (sélecteur à fréquence intermédiaire en particulier) fournissant les signaux D2-MAC et CVBS, et ceux branchés en aval (circuits vidéo recevant le signal vidéo RVB).

Ce dispositif de la figure 3 comporte un convertisseur analogique/numérique 21 dont le bus de sortie 22 est relié à : un processeur 23 de balayage pour le tube cathodique du téléviseur, un processeur vidéo 24, un décodeur MAC 25, et un séparateur de données CVBS 26. Les bus de sortie des circuits 24 et 25 sont reliés à un convertisseur numérique-analogique 27. Le décodeur 25 est relié à un séparateur de données MAC 28, qui est lui-même relié à un générateur de données 29. Ce générateur 29 est également relié au séparateur CVBS 26. La sortie du générateur 29 est reliée au convertisseur 27. La sortie analogique RVB du convertisseur 27 est, d'une part, reliée aux circuits vidéo (non représentés) du téléviseur, et d'autre part à un codeur 30, qui est ici un codeur PAL. La sortie du codeur 30 est reliée au magnétoscope 31.

On peut donc, dans ce circuit de la figure 3, n'utiliser qu'un seul générateur de caractères. Il n'est alors cependant plus possible de distinguer les caractères correspondant à un sous-titre de ceux correspondant à un menu et il est douteux que l'usager souhaite enregistrer le menu sur son magnétoscope.

La présente invention a pour objet un procédé qui permette de commander, dans un récepteur de télévision, diverses fonctions, telles que l'inhibition de l'enregistrement de menus, qui soit simple à mettre en oeuvre, même pour plusieurs fonctions différentes, et ce, en synchronisme avec les signaux vidéo visualisés sur l'écran du récepteur.

La présente invention a également pour objet un dispositif de mise en oeuvre de ce procédé, en particulier un dispositif de synthèse d'image, qui soit peu onéreux, en particulier en n'utilisant qu'un seul générateur de caractères pour créer un menu et des sous-titres.

L'invention comporte un procédé et un dispositif.

Le procédé est conforme à la description qui en est donnée dans la revendication indépendante 1. D'autres caractéristiques avantageuses du procédé sont décrites dans des revendications de procédé dépendantes.

Le dispositif est conforme à la description qui en est donnée dans la revendication indépendante de dispositif.

La présente invention sera mieux comprise à la lecture de la description détaillée d'un mode de réalisation, pris à titre d'exemple non limitatif et illustré par les dessins annexés, dans lesquels :
- les figures 1 à 3, déjà citées ci-dessus, se rapportent à des dispositifs de l'art antérieur ;
- la figure 4 est un diagramme représentant les "plans" R, V, B et d'insertion, ce dernier étant mis en oeuvre par la présente invention, et
- la figure 5 est un bloc-diagramme d'un dispositif conforme à l'invention.

La présente invention part d'un générateur de caractères habituellement utilisé (par exemple le circuit TPU 2733) et dont l'insertion du signal de sortie dans le signal vidéo est validée par un signal appelé "Fast blanking". L'invention utilise ce générateur de caractères pour lui faire fournir au moins un deuxième signal de "Fast blanking" pour activer la fonction d'enregistrement. Ces signaux supplémentaires permettent de produire au moins une fenêtre d'insertion synchrone de l'image affichée.

La production de tels signaux supplémentaires fait appel à des techniques bien connues en soi pour l'affichage à l'écran de caractères produits par des générateurs de caractères.

Une première solution consiste à utiliser une mémoire dans laquelle on stocke l'image à visualiser. Chaque caractère ou chaque pixel de l'écran est représenté par un ou plusieurs nombres binaires. Dans le cas où un seul bit est affecté à chaque composante primaire de l'image (Rouge, Vert, Bleu), 3 bits sont utilisés pour chaque pixel de l'image. Selon la technique connue, on affecte un bit supplémentaire à chaque pixel pour produire l'information "commande d'insertion" habituellement utilisée. Selon l'invention on ajoute à chaque pixel un cinquième bit pour produire une deuxième commande d'insertion, afin d'indiquer si l'information doit être enregistrée ou non sur le magnétoscope. Ces commandes sont définies par le générateur de caractères (8) auquel est associée la mémoire à partir des commandes qu'il reçoit de la chaîne vidéo. Le générateur de caractères écrit dans la mémoire 32 à basse fréquence (uniquement lorsque le texte à afficher doit être modifié), mais la lecture de la mémoire est faite à la fréquence vidéo. La position du texte sur l'écran est définie par les signaux de synchronisation horizontale et verticale. Dans la pratique, la réalisation relève de la réalisation matérielle de chaque circuit intégré. C'est ainsi que si l'on considère un générateur de caractères de télétexte standard, une page de texte est représentée par 25 lignes de 40 caractères chacune, chaque lettre étant définie par un octet. Il faut donc une mémoire d'un kilo-octet pour représenter une page de caractères. Chaque octet est converti en caractères au moyen du générateur de caractères proprement dit. En général une ligne est transférée de la mémoire de page dans une mémoire tampon sur la puce. Cette mémoire tampon alimente en temps réel le générateur de caractères qui fournit les signaux vidéo R, V, B.

Le signal de commande d'insertion peut être fabriqué de différentes manières. Une solution consiste à utiliser un bit de l'octet représentant un caractère pour signaler que le signal d'insertion est actif. L'utilisation d'un deuxième bit permet donc de fournir un deuxième signal d'insertion indépendant. Pour éviter de diminuer le nombre de caractères qui peuvent être représentés, on peut également étendre l'octet représentant un caractère de 8 à 10 bits.

Une autre solution pour définir le signal d'insertion consiste à définir une adresse de début et une adresse de fin d'insertion. Si la mémoire est organisée en 25 lignes de 40 caractères, on utilisera un compteur de lignes et un compteur de colonnes associés, pour chaque signal d'insertion, à des comparateurs.

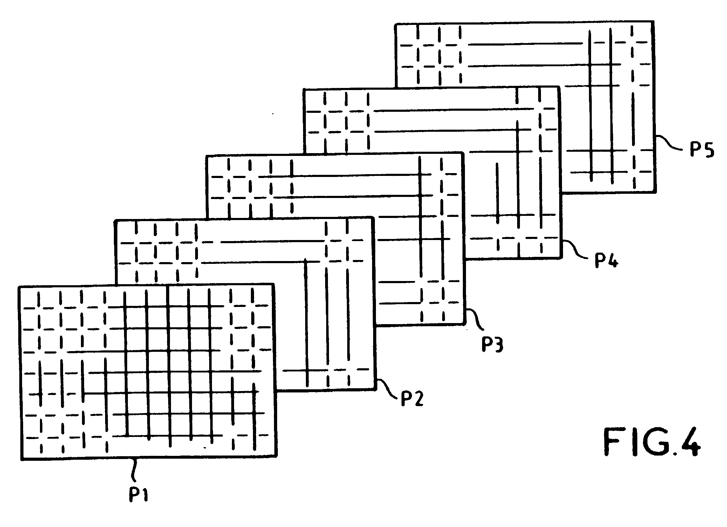

On a représenté en figure 4 cinq "pages" ou "plans" de mémoire P1 à P5. Chacun de ces plans a une capacité d'une trame. Pour la commodité de la représentation, chaque plan se présente sous forme d'une matrice rectangulaire comportant M colonnes et N lignes, correspondant à une image écran à M pixels par ligne et N lignes. Les trois premiers plans P1 à P3 correspondent respectivement aux composantes R, V, B des pixels de chaque trame. Le quatrième plan, P4, mémorise pour chaque pixel de chaque trame, la commande ("oui" ou "non" sur un seul bit) d'insertion habituelle. Le cinquième plan P5 mémorise, pour chaque pixel de chaque trame, la commande, sur un bit, d'enregistrement ou non sur le magnétoscope du pixel correspondant. Bien entendu, ces "plans" P1 à P4 ne sont pas matérialisés, mais correspondent chacun à M x N adresses d'une mémoire vive de trames. Il est également bien entendu que l'on peut mettre en oeuvre un plus grand nombre de "plans" supplémentaires P6, P7, ... pour assurer d'autres fonctions : enregistrement sur un dispositif autre que le magnétoscope en question, alarmes, effets spéciaux ...

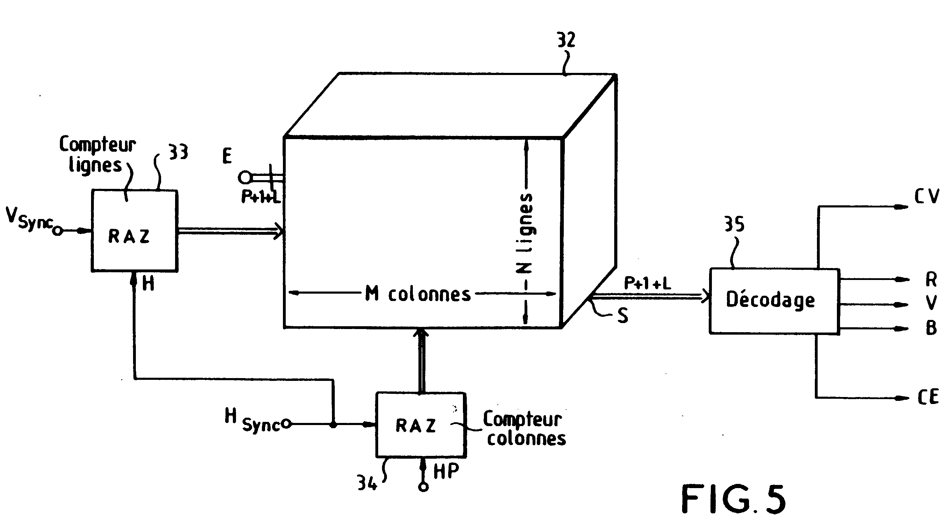

On a représenté en figure 5 le bloc-diagramme d'un mode de réalisation possible d'un circuit de mise en oeuvre de l'invention. La mémoire de ce circuit est branchée sur le générateur de caractères unique du récepteur ou fait partie du circuit intégré contenant ce générateur. Ce générateur de caractères produit les caractères aussi bien pour les sous-titres que pour les menus, seuls les sous-titres devant être enregistrés.

Le circuit de la figure 5 comporte une mémoire 32 recevant sur une entrée E les caractères à afficher et à enregistrer le cas échéant. Bien qu'en général l'entrée et la sortie d'une mémoire telle que celles actuellement utilisées soient confondues, elles ont été représentées séparées sur le dessin pour la clarté des explications. La mémoire 32 est organisée en P "pages" identiques comportant chacune N "lignes" et M "colonnes", qui correspondent aux N lignes et M colonnes de pixels de l'image vidéo. Bien entendu, cette mémoire peut être constituée de P circuits identiques mis en parallèle et capables de mémoriser chacun au moins M x N bits, ou bien d'une mémoire à P bits de sortie au moins, à M x N adresses au moins. Comme précisé ci-dessus, P est au moins égal à 1.

La mémoire 32 est adressée par un compteur de lignes 33 et par un compteur de colonnes 34. En outre, l'entrée E de la mémoire 32 reçoit via le générateur de caractères (8), dans le cas d'un décodeur D2-MAC paquets, les signaux de commande issus du séparateur de données (séparateur 7 de la figure 1) pour enregistrer des sous-titres éventuels.

Si l'on prévoit d'autres fonctions qui doivent être synchronisées avec l'image visualisée sur l'écran du récepteur, on augmente corrélativement la capacité des cellules de la mémoire 32, le nombre de bits de l'entrée E et de la sortie S, ainsi que la capacité du circuit de décodage (circuit 35 décrit ci-dessous).

Les commandes envoyées à l'entrée E peuvent être transmises soit chacune sur un fil individuel, soit être multiplexées (multiplex temporel ou modulations différentes d'une même porteuse) sur un même fil.

L'entrée RAZ de remise à zéro du compteur 33 reçoit les signaux V sync de synchronisation verticale du signal vidéo, et son entrée de comptage reçoit les signaux H sync de synchronisation horizontale du signal vidéo. Ce signal H sync est également envoyé sur l'entrée RAZ de remise à zéro au compteur 34, dont l'entrée de comptage reçoit des signaux HP d'horloge de pixels c'est-à-dire des signaux de synchronisation arrivant à la fréquence des pixels. Les signaux V sync, H sync et HP sont obtenus de façon habituelle.

La sortie S de lecture de la mémoire 32 (sur P bits) est reliée à un circuit 35 de décodage. Ce circuit 35 peut être un simple circuit tampon séparant les différents signaux se présentant sur les P sorties de la mémoire 32. Ces signaux sont, bien entendu, les composantes RVB du signal vidéo, une commande CV de visualisation sur l'écran du récepteur des sous-titres et/ou menus (par incrustation), mémorisée dans le plan P4, et la commande CE d'enregistrement conforme à l'invention et activant l'enregistrement sur un magnétoscope de sous-titres (mais non pas de menus). Bien entendu, si le nombre de "plans" de la mémoire 32 est supérieur à cinq, le circuit 35 comporte d'autres sorties supplémentaires similaires à la sortie CE. Il est également bien entendu que si plus d'un nombre binaire est affecté à chaque composante primaire (R, V, B) de l'image, le circuit 35 a un nombre correspondant de sorties homologues aux sorties RVB.

L'image vidéo RVB est créée en lisant séquentiellement tous les mots de la mémoire 32. Le compteur de colonnes 34 est incrémenté par l'horloge de pixels et remis à zéro par H sync, c'est-à-dire à la fin de chaque ligne. Ce compteur commande donc le balayage lignes de la mémoire. Le signal H sync est également utilisé comme horloge du compteur de lignes 33 qui assure le balayage vertical de la mémoire, et est remis à zéro par V sync, c'est-à-dire à la fin de chaque trame.

Selon une variante économique de l'invention, on utilise au lieu de la mémoire 32 une mémoire de taille limitée, dont la capacité est par exemple réduite à la mémorisation de quelques pixels, dont la lecture est commandée par H sync et V sync, et dont le nombre de bits de sortie est toujours égal à P+1+L. Dans ce cas, la position verticale de ces deux lignes est définie par un compteur de lignes dont les états sont décodés à l'aide de circuits logiques appropriés dont la réalisation est évidente pour l'homme du métier.

## Revendications

1. Procédé pour synchroniser des fonctions de commande avec des signaux visualisés sur un écran d'un récepteur de télévision, les signaux visualisés sur l'écran constituant une image composite obtenue à partir d'un premier signal vidéo destiné à former une première image vidéo et un second signal vidéo codé par des mots de P bits, ces mots définissant ensemble au moins une fenêtre d'insertion dans la première image, procédé caractérisé en ce que les mots de P bits sont introduits dans une mémoire (32) balayée en synchronisme avec le premier signal vidéo, en ce que l'on adjoint à chaque mot de P bits un bit d'affichage formant ainsi des mots de P + 1 bits, le bit d'affichage commandant l'insertion du mot du second signal dans la première image et en ce que l'on charge en outre dans la mémoire (32) L bits formant ainsi des mots de P + 1 + L bits, P et L étant égaux ou supérieurs à 1, les L bits étant alors utilisés pour provoquer L commandes en synchronisme avec les signaux visualisés.

2. Procédé selon la revendication 1, caractérisé par le fait qu'au moins un des L bits sert à la commande d'enregistrement d'au moins une partie des seconds signaux vidéo.

3. Procédé selon la revendication 2, caractérisé par le fait que les second signaux vidéo comportent des signaux de synthèse produits par un générateur associé au récepteur.

4. Procédé selon la revendication 3, caractérisé par le fait que le générateur de signaux de synthèse est un générateur de caractères.

5. Récepteur de télévision comportant un dispositif pour synchroniser des fonctions de commande avec des signaux visualisés sur un écran du récepteur, les signaux visualisés étant formés par des moyens du récepteur recevant un signal vidéo comportant, d'une part, des premiers signaux destinés à former une première image vidéo sur l'écran du récepteur, et d'autre part, des seconds signaux destinés à former des caractères, le récepteur comportant des moyens (7) pour séparer les premiers et seconds signaux, le récepteur comportant également un microprocesseur (9) pour générer des menus présentés sur l'écran sous forme de caractères, d'un générateur de caractères générant des mots de P bits et des signaux dits de "fast blanking" pour commander l'insertion de chacun des pixels sur l'écran du récepteur, dispositif caractérisé en ce que le générateur de caractères génère au moins un signal supplémentaire permettant de créer en sortie du-dit générateur des mots de P + 1 + L bits, P et L étant supérieurs à 1, en ce que ces mots sont reçus par une mémoire (32) balayée à la lecture en synchronisme avec les premiers signaux vidéo, la mémoire étant adressée à cet effet par des compteurs de ligne (33) et de colonnes (34), ces compteurs recevant les impulsions de synchronisation verticale et horizontale des premiers signaux vidéo et en ce qu'une sortie de la mémoire alimente des moyens de décodage (35), ces moyens de décodage (35) ayant au moins deux sorties portant des signaux de commande, une première et une seconde, la première portant la commande d'affichage, la seconde portant une commande d'enregistrement.

## Patentansprüche

1. Verfahren zur Synchronisation von Steuerfunktionen mit Hilfe von am Bildschirm eines Fernsehempfängers angezeigten Signalen, wobei die am Bildschirm angezeigten Signale ein zusammengesetztes Bild darstellen, welches aus einem ersten Videosignal erzeugt wird, das für die Erzeugung eines ersten Videobildes und eines zweiten Videosignals bestimmt ist, welches durch Wörter von P Bits codiert ist, wobei diese Wörter zusammen mindestens ein Einfügefenster im ersten Bild definieren; Verfahren dadurch gekennzeichnet, daß die Wörter aus P Bits in einen Speicher (32) eingeführt werden, der synchron mit dem ersten Videosignal abgetastet wird, wobei jedem Wort aus P Bits ein Anzeigebit hinzugefügt wird, wodurch Wörter aus P + 1 Bits erzeugt werden und das Anzeigebit die Einfügung des Wortes des zweiten Signals in das erste Bild steuert, und wobei überdies im Speicher (32) L Bits geladen werden, wodurch Wörter von P + 1 + L Bits erzeugt werden, und wobei P und L gleich bzw. größer als 1 sind, und die L Bits dazu verwendet werden, synchron mit den angezeigten Signalen L Befehle zu erzeugen.

2. Verfahren nach Anspruch 1, dadurch gekennzeichnet, daß mindestens eins der L Bits dem Aufzeichnungsbefehl von mindestens einem Teil der zweiten Videosignale dient.

3. Verfahren nach Anspruch 2, dadurch gekennzeichnet, daß die zweiten Videosignale Synthesesignale enthalten, die von einem mit dem Empfänger verbundenen Generator erzeugt wurden.

4. Verfahren nach Anspruch 3, dadurch gekennzeichnet, daß der Generator zur Erzeugung der Synthesesignale ein Zeichengenerator ist.

5. Fernsehempfänger mit einem Gerät zur Synchronisation der Steuerfunktionen mit Hilfe der an einem Empfängerbildschirm angezeigten Signalen, wobei die angezeigten Signale mit Hilfe der Elemente des Empfängers gebildet werden, der ein Videosignal empfängt, das einerseits erste Signale enthält, die dazu dienen, ein erstes Videobild am Empfängerbildschirm zu erzeugen, andererseits zweite Signale enthält, die dazu dienen, Zeichen zu erzeugen, wobei der Empfänger sowohl Elemente (7) zur Trennung der ersten und zweiten Signale enthält, als auch einen Mikroprozessor (9) zur Erzeugung von Menüs, die am Bildschirm in Form von Zeichen eines Zeichengenerators erscheinen, der Wörter von P Bits und sogenannte ,,Fast blanking"-Signale zur Steuerung der Einfügefunktion jedes Pixels am Empfängerbildschirm erzeugt, wobei das Gerät dadurch gekennzeichnet ist, daß der Zeichengenerator mindestens ein Zusatzsignal erzeugt, wodurch am Ausgang des besagten Generators Wörter von P + 1 + L Bits erzeugt werden können, wobei P und L größer als 1 sind und diese Wörter von einem Speicher (32) empfangen werden, der beim Lesen synchron mit Hilfe der ersten Videosignale abgetastet wird, wobei die Adressierung des Speichers durch den Zeilenzähler (33) und Spaltenzähler (34) erfolgt, wobei diese Zähler die vertikalen und horizontalen Synchronisationsimpulse der ersten Videosignale empfangen und wobei ein Ausgang des Speichers die Decoder-Elemente (35) speist, wobei diese Decoder-Elemente (35) mindestens zwei Ausgänge besitzen, die Steuersignale übertragen, und zwar einen ersten und einen zweiten Ausgang, wobei der erste den Anzeigebefehl überträgt und der zweite einen Aufzeichnungsbefehl.

## Claims

1. Process for synchronizing control functions with signals displayed on a screen of a television receiver, the signals displayed on the screen constituting a composite image obtained from a first video signal intended to form a first video image and a second video signal coded by words of P bits, these words together defining at least one insertion window in the first image, process characterized in that the words of P bits are introduced into a memory (32) scanned in synchronism with the first video signal, in that a display bit is appended to each word of P bits thereby forming words of P + 1 bits, the display bit controlling the insertion of the word of the second signal into the first image and in that L bits are moreover loaded into the memory (32) thereby forming words of P + 1 + L bits, P and L being equal to or greater than 1, the L bits being then used to prompt L commands in synchronism with the signals displayed.

2. Process according to Claim 1, characterized in that at least one of the L bits serves to control the recording of at least part of the second video signals.

3. Process according to Claim 2, characterized in that the second video signals include synthesis signals produced by a generator associated with the receiver.

4. Process according to Claim 3, characterized in that the generator of synthesis signals is a generator of characters.

5. Television receiver including a device for synchronizing control functions with signals displayed on a screen of a receiver, the signals displayed being formed by means of the receiver receiving a video signal including, on the one hand, first signals intended to form a first video image on the screen of the receiver, and on the other hand, second signals intended to form characters, the receiver including means (7) for separating the first and second signals, the receiver also including a microprocessor (9) for generating menus presented on the screen in the form of characters, of a generator of characters generating words of P bits and so-called "fast blanking" signals for controlling the insertion of each of the pixels on the screen of the receiver, device characterized in that the generator of characters generates at least one additional signal making it possible to create, as output from said generator, words of P + 1 + L bits, P and L being greater than 1, in that these words are received by a memory (32) scanned while reading in synchronism with the first video signals, the memory being addressed for this purpose by line (33) and column (34) counters, these counters receiving the vertical and horizontal synchronization pulses of the first video signals and in that an output of the memory feeds decoding means (35), these decoding means (35) having at least two outputs, a first and a second, carrying control signals, the first carrying the display command, the second carrying a record command.
